(19) Europäisches Patentamt

European Patent Office

Office européen des brevets

(11) Numéro de publication: **0 013 208 B1**

# FASCICULE DE BREVET EUROPEEN

(12)

(45) Date de publication du fascicule de brevet: **09.12.81**

(21) Numéro de dépôt: **79400994.4**

(22) Date de dépôt: **10.12.79**

(51) Int. Cl.³: **C 11 D 3/12, C 09 C 1/30**

(54) Utilisation d'un agent récurant non abrasif dans une composition lave-vaisselle.

(30) Priorité: **20.12.78 FR 7835742**

(43) Date de publication de la demande:
**09.07.80 Bulletin 80/14**

(45) Mention de la délivrance du brevet:
**09.12.81 Bulletin 81/49**

(84) Etats contractants désignés:
**BE DE FR GB IT NL SE**

(56) Documents cités:
**DE-A-1942306**
**FR-A-2281979**
**FR-A-2353486**

(73) Titulaire: **RHONE-POULENC INDUSTRIES, 22, avenue Montaigne, F-75008 Paris (FR)**

(72) Inventeur: **Joubert, Daniel, Route du Stade Reyrieux, F-01600 - Trevoux (FR)**
Inventeur: **Vrisakis, Georges, 14, rue Galliéni, F-69660-Collonges-au-Mont d'Or (FR)**

(74) Mandataire: **Martin, Henri et al, RHONE-POULENC Service Brevets Chimie et Polymères Boîte Postale 753, F-75360 Paris Cedex 08 (FR)**

# Utilisation d'un agent récurant non abrasif dans une composition lave-vaisselle

La présente invention a pour objet l'utilisation d'un agent récurant non abrasif à base d'un dérivé insoluble de la silice dans les compositions lave-vaisselle.

On a proposé depuis longtemps d'utiliser certains dérivés de la silice dans les compositions ménagères de lavage des produits textiles. C'est ainsi que le brevet français N° 2281979 décrit la mise d'un tensio-actif non ionique sur un support renfermant un dérivé insoluble de la silice; ledit dérivé présentant des agglomérats poreux dus à l'agglomération d'agrégats primaires dont le diamètre de la particule ultime mesurée au microscope électronique est compris entre 100 et 500 Å, une surface BET comprise entre 50 et 600 m²/g et une porosité mesurée au porosimètre à mercure, pour les vides situés dans l'intervalle de 400 Å à 2,5 $\mu$, comprise entre 50 et 200 cm³/100 g. La mise en œuvre des agents non ioniques sur de tels supports évite l'atomisation et de ce fait supprime l'inconvénient du pluming.

Il a maintenant été trouvé une autre utilisation de dérivés insolubles de la silice dans le domaine de la détergence, plus précisément dans les compositions lave-vaisselle.

On sait que les formulations courantes pour lave-vaisselle donnent relativement satisfaction à l'usager.

Toutefois, il s'avère que le lavage en lave-vaisselle de casseroles et autres ustensiles revêtus de films plastiques, de silicones, de céramique ou autres revêtements antiadhérents, laisse à désirer dès lors que leur état de surface a été détérioré par l'usage quotidien, ce qui est rapidement le cas.

Il faut donc que la ménagère complète manuellement le nettoyage, ce qui bien entendu est préjudiciable au développement des lave-vaisselle.

Une première voie, pour résoudre ce problème, consiste à jouer sur l'activité chimique des formulations de lessive. Mais il va sans dire que l'on est limité dans cette voie pour des raisons évidentes de nocivité ou de pollution.

C'est pourquoi la présente invention a pour objet d'augmenter l'activité mécanique du lavage, tout en évitant de provoquer une abrasion préjudiciable sur les pièces de vaisselle les plus fragiles, en particulier la verrerie.

Des recherches longues de la titulaire ont montré que l'on peut atteindre ce double but en utilisant un agent à base d'un dérivé insoluble de la silice présentant une surface BET comprise entre 80 et 150 m²/g, une surface CTAB inférieure à 45 m²/g et une porosité au porosimètre à mercure inférieure à 20 cm³/g, comme agent récurant non abrasif, dans une composition lave-vaisselle.

Le dérivé insoluble de la silice présente avantageusement une granulométrie qui se caractérise par un diamètre moyen compris entre 15 et 20 $\mu$, un refus au tamis de 45 $\mu$ compris entre 10 et 20% et un refus au tamis de 25 $\mu$ de 20 à 35%.

Selon l'invention, l'agent récurant est constitué par un produit dur peu poreux, récurant mais non abrasif.

Il est de préférence constitué par une silice telle qu'obtenue par précipitation.

La surface spécifique BET est déterminée selon la méthode de Brunauer-Emmett-Teller décrite dans «The Journal of the American Chemical Society» (vol. 60, p. 309, février 1938). La surface CTAB est la surface externe mesurée par absorption de bromure de cétyltriméthylammonium à pH 9, selon la méthode exposée par Jay, Janzen et G. Kraus dans «Rubber Chemistry and Technology 44» (1971), pp. 1287-1296.

Le volume des micropores correspond à la porosité mesurée au porosimètre à mercure pour les vides situés dans l'intervalle de 400 Å à 2,5 $\mu$.

Avantageusement, une composition lessivielle selon l'invention renferme de 20% à 60% d'agent récurant, de 20 à 60% de métasilicate de sodium, de 15 à 30% de tripolyphosphate de sodium, de 0,5 à 2% d'un agent tensio-actif et éventuellement d'autres composés comme agent chlorant, etc.

Mais la présente invention sera plus aisément comprise à l'aide des exemples suivants donnés à titre illustratif mais nullement limitatif.

*Exemple 1:*

Dans cet exemple, on fait appel à une silice de précipitation présentant les caractéristiques suivantes:

| | |
|---|---|
| Surface spécifique BET . . . . . | 120 m²/g |
| Surface externe CTAB . . . . . | 41 m²/g |
| Volume mesuré au porosimètre à Hg . . . . . . . . . . . . . | 12,9 cm³/g |
| Diamètre moyen des particules | 15 $\mu$ |
| Refus à 25 $\mu$ . . . . . . . . . . | 26% |
| Refus à 45 $\mu$ . . . . . . . . . . | 12% |

L'efficacité du lavage est appréciée grâce au test suivant:

On prépare une salissure constituée par un lait commercial non écrémé dilué à moitié par de l'eau de ville; ce lait est déposé sur des plaques d'alliage d'aluminium qui ont été conditionnées auparavant par l'attaque ménagée au bain de soude, lavage et séchage. On met 15 g de lait sur ces plaques en duralumin de 175×200 très planes.

On fixe ensuite la salissure par séchage à l'étuve à 120°C pendant 1½ h. On lave ensuite les plaques dans un lave-vaisselle Miele G50 avec 35 g de lessive et on effectue un cycle de lavage de 50 min. Puis on sèche ½ h à 100°C.

On évalue l'efficacité du lavage par le rapport pondéral:

$$E\% = \frac{\text{Plaques salies} - \text{Plaques lavées}}{\text{Plaques salies} - \text{Plaques propres}} \times 100$$

Dans les exemples, on a utilisé une composition lessivielle de formule en poids:

Métasilicate de sodium . . . . . . . . . 40%
Tripolyphosphate de sodium . . . . . . 15%
Carbonate de sodium. . . . . . . . . . 10%
Silice récurante . . . . . . . . . . . 30%
Tensio-actif non ionique (Pluronic) . . . 2%
Dérivé chloré . . . . . . . . . . . . 3%
(dichloro-isocyanurate de sodium commercialisé sous le nom de CDB Clearon).

On utilise comme référence une composition identique, sauf que l'on a remplacé la silice par du sulfate de sodium.

Dans l'exemple précédent, on note une efficacité de +2,8% par rapport à la formule de référence.

Si l'on broie cette silice jusqu'à obtenir un diamètre moyen égal à 5 μ, on observe une chute de son efficacité qui devient sensiblement nulle. Si au contraire on maintient la granulométrie, dès que l'on élève la surface BET à 180 m²/g, on observe la même absence d'amélioration.

De plus, on apprécie le pouvoir abrasif par lavage répété 100 fois et appréciation visuelle par photographie.

On note que, dans ce cas, il n'y a pas abrasion sur un verre sodocalcique. L'appréciation de l'abrasion se fait par comparaison avec un verre identique ayant subi 100 lavages avec une formule sans agent récurant.

A titre comparatif, on a noté qu'en remplaçant la silice selon l'invention par un sable broyé, l'efficacité toujours selon le même critère était seulement de +0,97% alors qu'il y a abrasion notoire.

Une silice naturelle broyée, généralement employée en charge pour caoutchouc de refus au tamis de 25 μ égal à 7% et de diamètre moyen compris entre 5 et 10 μ, donne un bon résultat sur le plan de l'efficacité 2,2%, mais se montre très mauvais en ce qui concerne l'abrasion. Une silice de surface BET égale à 315 m²/g, de surface CTAB égale à 46 m²/g, de porosité égale à 61 cm³/g, de diamètre moyen égal à 7 μ, révèle une efficacité négative −4,95% de même qu'une silice de surface BET égale à 265 m²/g de surface CTAB égale à 100 m²/g, de porosité égale à 97 cm³/g et de diamètre moyen des particules égal à 70 μ, dont l'efficacité se révèle être de −4,03%.

Enfin, on fait appel à un silicoaluminate de sodium de surface BET égale à 101 m²/g et de porosité égale à 8 cm³/g, mais de surface externe CTAB égale à 67 m²/g et de diamètre égal à 4,5 μ. Son efficacité de récurage se révèle être sensiblement égale à celle du sulfate, c'est-à-dire qu'on peut la considérer comme nulle.

Ces exemples illustrent ainsi que, de manière surprenante, un agent récurant utilisé selon la présente invention donne à la fois une amélioration en ce qui concerne le pouvoir récurant avec une absence de pouvoir abrasif.

Bien évidemment, les limites indiquées ne sont pas absolues, car elles sont établies en fonction d'une corrélation empirique entre les paramètres de texture et de granulométrie, et l'efficacité au lavage est appréciée selon des tests qui ne peuvent prétendre être le reflet d'une vérité absolue en matière de lavage.

Toutefois, à ces réserves près, selon la présente invention on observe que, de manière inattendue, un dérivé minéral insoluble tel que la silice peut donner d'excellents résultats comme agent récurant, c'est-à-dire: élimination de la salissure sans abrasion du substrat portant la salissure à condition de se situer dans un intervalle de granulométrie déterminé et dans un état de morphologie également déterminé.

## Revendications

1. Utilisation d'un agent à base d'un dérivé insoluble de la silice présentant une surface BET comprise entre 80 et 150 m²/g, une surface CTAB inférieure à 45 m²/g et une porosité au porosimètre à mercure inférieure à 20 cm³/g, comme agent récurant non abrasif dans une composition lave-vaisselle.

2. Utilisation selon la revendication 1, caractérisée par le fait que le dérivé insoluble de la silice présente un diamètre moyen des particules compris entre 15 et 20 μ, un refus au tamis de 45 μ compris entre 10 et 20% et un refus au tamis de 25 μ compris entre 20 et 35%.

3. Utilisation selon l'une des revendications 1 ou 2, caractérisée par le fait que l'agent est mis en œuvre dans une composition lave-vaisselle renfermant de:
— 20 à 60% en poids de métasilicate de sodium,
— 15 à 30% en poids de tripolyphosphate de sodium,
— 0,5 à 2% en poids de tensio-actif,
— 20 à 60% en poids dudit agent.

## Patentansprüche

1. Verwendung eines Mittels auf der Basis eines unlöslichen Kieselsäurederivats mit einer BET-Oberfläche zwischen 80 und 150 m²/g, einer CTAB-Oberfläche unter 45 m²/g und einer Porosität, gemessen in einem Quecksilberporosimeter kleiner als 20 cm³/g als nichtabschleifendes Scheuerpulver in einem Geschirrspülmittel.

2. Verwendung nach Anspruch 1, dadurch gekennzeichnet, dass das unlösliche Kieselsäurederivat einen mittleren Teilchendurchmesser zwischen 15 und 20 μm, einen Siebrückstand auf einem 45 μm Sieb zwischen 10 und 20% und einen Siebrückstand auf einem 25 μm Sieb zwischen 20 und 35% aufweist.

3. Verwendung nach einem der Ansprüche 1 oder 2, dadurch gekennzeichnet, dass das Mittel in einer Spülmittelmischung eingesetzt wird, die
— 20 bis 60 Gewichtsprozent Natriummetasilikat
— 15 bis 30 Gewichtsprozent Natriumtripolyphosphat
— 0,5 bis 2 Gewichtsprozent eines oberflächenaktiven Stoffes
— 20 bis 60 Gewichtsprozent des Mittels enthält.

## Claims

1. Use of an agent based on an insoluble derivative of silica having a BET surface area of between 80 and 150 m²/g, a CTAB surface area of less than 45 m²/g and a porosity on a mercury porosimeter of less than 20 cm³/g, as a non-abrasive scouring agent in a dishwashing composition.

2. Use according to claim 1 characterised in that the insoluble silica derivative has a mean particle diameter of between 15 and 20 µ, an oversize of between 10 and 20% on a 45 µ sieve and an oversize of between 20 and 35% on a 25 µ sieve.

3. Use according to claim 1 or claim 2 characterised in that the agent is used in a dishwashing composition containing:
— from 20 to 60% by weight of sodium metasilicate
— from 15 to 30% by weight of sodium tripolyphosphate
— from 0.5 to 2% by weight of surfactant, and
— from 20 to 60% by weight of said agent.